# EUROPÄISCHE PATENTSCHRIFT

(11) **EP 3 608 552 B1**
(45) Veröffentlichungstag und Bekanntmachung des Hinweises auf die Patenterteilung: **17.02.2021**
(21) Anmeldenummer: 19199949.9
(22) Anmeldetag: 19.07.2018
(51) Int. Cl.: F16C 11/06

(54) **KUGELGELENK**
BALL JOINT
JOINT PIVOTANT

(30) Priorität: 08.08.2017 DE 102017118030
(43) Veröffentlichungstag der Anmeldung: 12.02.2020
(62) Teilanmeldung aus: 18184511.6
(73) Patentinhaber: THK Rhythm Automotive GmbH, 40233 Düsseldorf (DE)
(72) Erfinder: Schaumann, Lothar, 40233 Düsseldorf (DE); Walter, Harald, 40233 Düsseldorf (DE)
(74) Vertreter: Prinz & Partner mbB

(56) Entgegenhaltungen:
- DE-A1- 3 731 586

## Beschreibung

Die Erfindung betrifft ein Kugelgelenk, das insbesondere im Bereich von Kraftfahrzeugen als Teil des Fahrwerks verwendet werden kann. Es handelt sich insbesondere um ein sogenanntes Einpress-Kugelgelenk, das in einen Radträger, einen Längslenker, einen Querlenker oder ein ähnliches Aufhängungsbauteil eingepresst werden kann und dazu dient, dieses Bauteil mit einem anderen so zu verbinden, dass eine gewisse Beweglichkeit relativ zueinander möglich ist.

Kugelgelenke sind seit Jahrzehnten in den verschiedensten Ausgestaltungen bekannt. Die üblichen Anforderungen sind eine lange Lebensdauer, ein geringer Verschleiß, kontrollierte und möglichst niedrige Reibungskräfte sowie eine hohe Auszugsfestigkeit des im Gehäuse des Kugelgelenks aufgenommenen Kugelzapfens. Hinzu kommen möglichst geringe Herstellungskosten sowie ein möglichst geringes Gewicht.

Insbesondere hinsichtlich des Gewichts und der Herstellungskosten gibt es jedoch weiter Verbesserungsbedarf.

In der DE 10 2010 041 306 A1 ist ein Kugelgelenk mit einem Außengehäuse und einem Innengehäuse gezeigt.

Weitere Ausgestaltungen von Kugelgelenken sind ferner aus der WO 2012/026778 A2, der GB 2 481 880 A1, der WO 2005/057028 A, der DE 36 13 808 A1, der US 3 418 706 A, der DE 1 552 120 A1, der US 2013/0294816 A1 sowie der DE 37 31 586 A1 bekannt.

Die Aufgabe der Erfindung besteht daher darin, ein Kugelgelenk zu schaffen, das alle üblichen Anforderungen hinsichtlich der Betriebsparameter erfüllt und sich zusätzlich durch ein geringes Gewicht und geringe Herstellungskosten auszeichnet.

Zur Lösung dieser Aufgabe ist erfindungsgemäß ein Kugelgelenk mit einem ringförmigen Außengehäuse vorgesehen, das aus mindestens einer Blechhülse besteht, einem im Außengehäuse in axialer Richtung fest aufgenommenen, ringförmigen Innengehäuse, das aus mindestens einer Metallhülse besteht, einer im Innengehäuse aufgenommenen Lagerschale und einem Kugelzapfen, der in der Lagerschale aufgenommen ist. Zwischen dem Innengehäuse und dem Außengehäuse sind zwei Stützringe vorgesehen, die mit dem Innengehäuse und dem Außengehäuse verschweißt sind. Ferner ist zwischen der Innenwand des Außengehäuses und der Außenwand des Innengehäuses ein Freiraum vorhanden.

Die Stützringe erhöhen die Festigkeit des Gehäuses erheblich. Der Freiraum ermöglicht es, dass sich das Außengehäuse elastisch relativ zum Innengehäuse verformt, ohne dass eine eventuelle Verformung unmittelbar auf das Innengehäuse weitergegeben wird; somit gibt es keine Rückwirkung auf die Reibungskräfte bei der Verstellung des Kugelzapfens innerhalb des Gehäuses, wenn das Außengehäuse verformt wird. Die angesprochene Verformung des Außengehäuses kann insbesondere dann auftreten, wenn das Kugelgelenk in eine Aufnahmeöffnung beispielsweise eines Fahrwerkbauteils eingepresst wird.

Die Erfindung beruht ferner auf dem Grundgedanken, das Gehäuse aus zwei vergleichsweise dünnwandigen und damit leichten Bauteilen herzustellen, nämlich einer Blechhülse für das Außengehäuse und einer zweiten Metallhülse für das Innengehäuse. Gegenüber den aus dem Stand der Technik bekannten Konstruktionen, die sehr massive Bauteile für das Gehäuse verwenden, ergibt sich ein erheblicher Gewichtsvorteil. Außerdem ergeben sich geringe Herstellungskosten, da Blechbauteile vergleichsweise einfach hergestellt und umgeformt werden können. Abhängig von den verwendeten Rohlingen kann sich der Vorteil ergeben, dass keine spanende Bearbeitung erforderlich ist.

Gemäß einer Ausführungsform ist vorgesehen, dass das Innengehäuse ebenfalls eine Blechhülse ist. Dies reduziert die Herstellungskosten.

Alternativ kann vorgesehen sein, dass die Innenhülse ein Drehteil ist. Auf diese Weise lassen sich besonders enge Toleranzen einhalten.

Vorzugsweise weist das Innengehäuse an seinen axialen Enden eine radiale Aufweitung auf, die jeweils als Sitz für einen Dichtungsbalg dient. Dieser Sitz kann mit sehr geringem Zusatzaufwand am Innengehäuse angebracht werden, sodass der Dichtungsbalg zuverlässig am Gehäuse des Kugelgelenks montiert werden kann.

Gemäß einer Ausgestaltung der Erfindung besteht das Außengehäuse aus einer einstückig ausgeführten Hülse. Dies verringert den Herstellungsaufwand.

Das Innengehäuse kann aus zwei miteinander verschweißten Halbschalen gebildet sein, zwischen denen dann die Lagerschale mit geringem Aufwand angeordnet werden kann.

Sowohl das Außengehäuse als auch das Innengehäuse können aus Rohrabschnitten bestehen, die mit geeigneter Länge von einem Rohr abgeschnitten werden. Es ist alternativ auch möglich, dass das Außengehäuse und/oder das Innengehäuse aus einem Blechstreifen besteht, der zu einer Hülse umgeformt ist, wobei zwei einander gegenüberliegende, sich in axialer Richtung erstreckende Längsränder miteinander verschweißt sind. Diese Ausgestaltung resultiert in besonders geringen Herstellungskosten.

Der Kugelzapfen kann hohl ausgeführt sein. Dies ist insbesondere vorteilhaft bei einem Einpressgelenk, da sich durch den Kugelzapfen ein Befestigungsbolzen oder Ähnliches erstrecken kann, mit dem das Kugelgelenk mit einem Fahrwerkteil verbunden werden kann.

Die Erfindung wird nachfolgend anhand verschiedener Ausführungsformen beschrieben, die in den beigefügten Zeichnungen dargestellt sind. In diesen zeigen:
- Figur 1 in einem schematischen Querschnitt ein Kugelgelenk gemäß einer ersten Ausführungsform, die nicht unter den Schutzumfang des Anspruchs 1 fällt;
- Figur 2 in einem schematischen Querschnitt die Bauteile Kugelzapfen, Lagerschale und Innengehäuse des Kugelgelenks von Figur 1;
- Figur 3 in einem schematischen Querschnitt die Anbringung des Außengehäuses am vormontierten Kugelgelenk von Figur 2;
- Figur 4 in einem schematischen Querschnitt die verschiedenen Bauteile und die Montage eines Kugelgelenks gemäß einer zweiten Ausführungsform, die nicht unter den Schutzumfang des Anspruchs 1 fällt;
- Figur 5 in einer Ansicht entsprechend derjenigen von Figur 4 ein Kugelgelenk gemäß einer dritten Ausführungsform, die nicht unter den Schutzumfang des Anspruchs 1 fällt;
- Figur 6 in einer Schnittansicht ein Innengehäuse in einer alternativen Ausführungsvariante, die nicht unter den Schutzumfang des Anspruchs 1 fällt;
- Figur 7 in einer schematischen Querschnittsansicht das Innengehäuse und der darin montierte Kugelzapfen gemäß einer vierten Ausführungsform, die nicht unter den Schutzumfang des Anspruchs 1 fällt; und
- Figur 8 in einer schematischen Querschnittsansicht ein Kugelgelenk gemäß einer Ausführungsform der Erfindung.

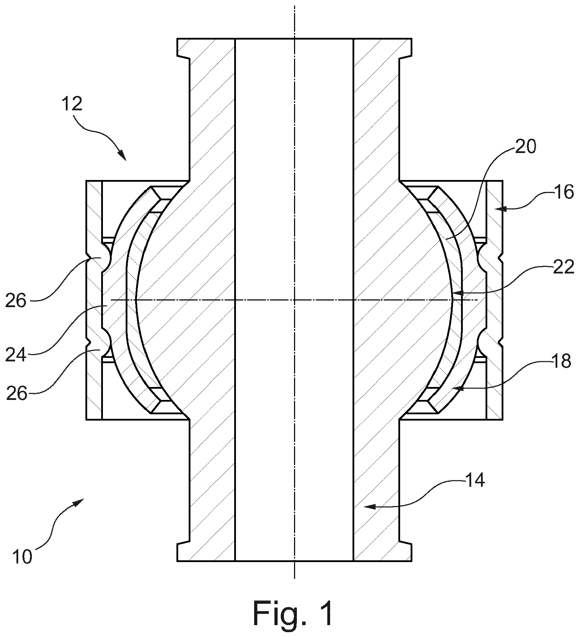

In Figur 1 ist schematisch ein Kugelgelenk 10 gezeigt, das ein insgesamt mit dem Bezugszeichen 12 versehenes Gehäuse aufweist, in dem ein Kugelzapfen 14 angebracht ist.

Das Gehäuse 12 ist insbesondere dafür vorgesehen, in eine Aufnahmeöffnung eines Fahrwerkteils eingepresst zu werden. Der Kugelzapfen 14 ist hohl ausgeführt und dafür vorgesehen, mit einem Fahrwerkteil verbunden zu werden, beispielsweise einem Quer- oder einem Längslenker.

Das Gehäuse 12 weist ein Außengehäuse 16 und ein Innengehäuse 18 auf. Das Innengehäuse 18 ist fest innerhalb des Außengehäuses 16 montiert, insbesondere hinsichtlich Auszugskräften, die in axialer Richtung wirken.

Innerhalb des Innengehäuses 18 ist eine Lagerschale 20 montiert. Die Lagerschale 20 umschließt einen Kugelabschnitt 22 des Kugelzapfens 14.

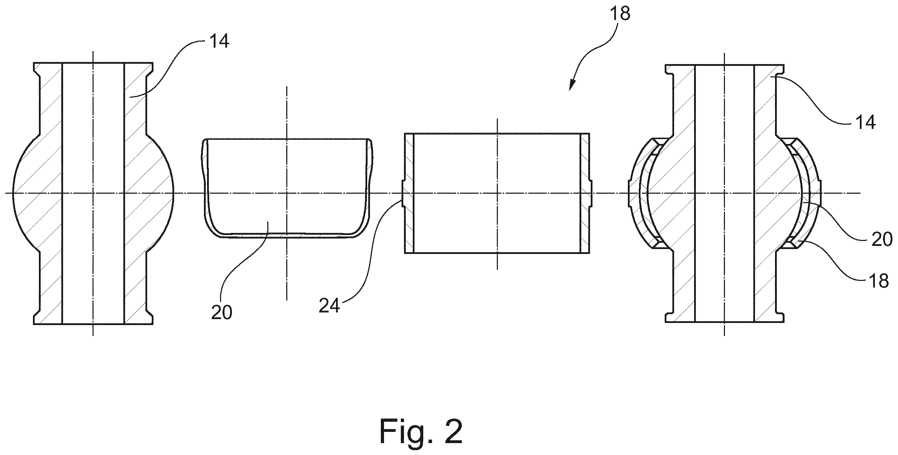

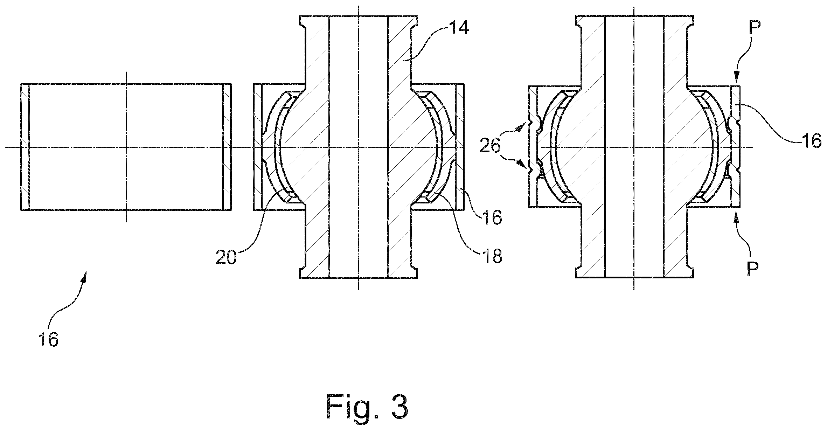

Anhand der Figuren 2 und 3 wird nachfolgend im Detail der Aufbau und die Montage des Kugelgelenks von Figur 1 erläutert.

Der Kugelzapfen 14 ist ein an sich bekanntes Bauteil insbesondere aus Stahl.

Auch die Lagerschale 20 ist hinsichtlich der verwendeten Materialien an sich bekannt.

Das Innengehäuse 18 ist ein Bauteil aus Blech. Es hat die Form einer zur Mittelachse des Kugelgelenks konzentrischen Hülse.

Das Innengehäuse 18 weist auf seinem Außenumfang einen in Umfangsrichtung umlaufenden Bund 24 auf. Dementsprechend ist in diesem Bereich die Wandstärke des Innengehäuses 18 größer als an den axialen Enden.

Das Innengehäuse 18 wird dadurch hergestellt, dass ein Blechstreifen geeignet gewalzt wird, sodass der Bund 24 entsteht, und dann zu einer Hülse umgeformt wird, deren einander in axialer Richtung gegenüberliegende Längsränder miteinander verschweißt sind. Somit handelt es sich beim Innengehäuse 18 um ein Blechbauteil, das sich durch ein sehr geringes Gewicht auszeichnet.

Alternativ kann für das Innengehäuse auch ein Drehteil verwendet werden.

Um das Kugelgelenk 10 vorzumontieren, werden die Lagerschale 20 und das Innengehäuse 18 um den Kugelabschnitt 22 herum montiert, und das Innengehäuse 18 wird so umgeformt, dass es die Lagerschale 20 mit einem definierten Anpressdruck gegen den Kugelabschnitt 22 drückt. Dabei wird das Innengehäuse 18 an seinen axialen Enden so umgeformt, dass es sich (mit der dazwischenliegenden Lagerschale 20) an die Kontur des Kugelabschnittes 22 anpasst.

Anschließend wird das Außengehäuse 16 montiert.

Das Außengehäuse 16 kann ähnlich wie das Innengehäuse 18 dadurch hergestellt werden, dass ein Blechstreifen hülsenförmig umgeformt und dann an seinen Längsrändern verschweißt wird.

Das Außengehäuse 16 wird dann um das Innengehäuse 18 herum angeordnet (siehe die mittlere Darstellung in Figur 3). Dabei entspricht der Außendurchmesser des Innengehäuses 18 im Bereich des Bundes 24 dem Innendurchmesser des Außengehäuses 16.

Schließlich wird das Außengehäuse 16 mit dem Innengehäuse 18 verbunden. Dies geschieht hier dadurch, dass am Außengehäuse 16 zwei in Umfangsrichtung umlaufende, sich nach innen erstreckende Sicken 26 erzeugt werden, die ohne Spiel auf der einen und der anderen Seite des Bundes 24 angreifen. Dadurch ist der Bund 24 und dementsprechend das Innengehäuse 18 zusammen mit der Lagerschale 20 und dem Kugelzapfen 14 in axialer Richtung am Außengehäuse 16 befestigt.

Es gibt verschiedene Möglichkeiten, um die Sicken 26 zu erzeugen. Eine Möglichkeit besteht darin, dass das Außengehäuse 16 an den Stellen, an denen die Sicken 26 entstehen sollen, vorgeprägt wird und dass anschließend das Außengehäuse 16 in axialer Richtung gestaucht wird (siehe die Pfeile P in der rechten Darstellung von Figur 3).

Eine andere Möglichkeit besteht darin, dass die Sicken 26 durch Rollieren im Außengehäuse 16 erzeugt werden.

Es ist auch möglich, diese beiden Verfahren miteinander zu kombinieren und in einem ersten Schritt das Außengehäuse 16 zu rollieren, sodass die Sicken 26 entstehen, und dann in einem zweiten Schritt das Außengehäuse 16 in axialer Richtung zu stauchen, um die Sicken 26 weiter plastisch zu verformen.

In jedem Fall sind die beiden Sicken 26 in einem solchen Abstand voneinander angeordnet, dass der Bund 24 in axialer Richtung spielfrei zwischen ihnen aufgenommen ist.

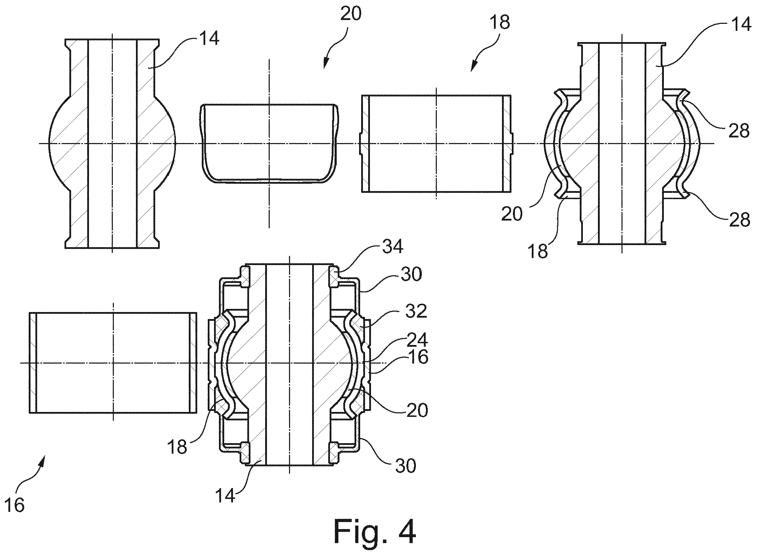

In Figur 4 ist eine zweite Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass bei der zweiten Ausführungsform das Innengehäuse 18 an seinen axialen Enden eine radiale Aufweitung 28 aufweist, sodass zusammen mit dem Außengehäuse 16 ein Sitz für jeweils einen Dichtungsbalg 30 gebildet ist. Der Dichtungsbalg 30 weist an jedem seiner Enden einen umlaufenden Wulst 32, 34 auf, wobei der Wulst 32 zwischen dem Innengehäuse 18 und dem Außengehäuse 16 fest eingespannt ist. Der Wulst 34 wird dann am Kugelzapfen 14 festgelegt.

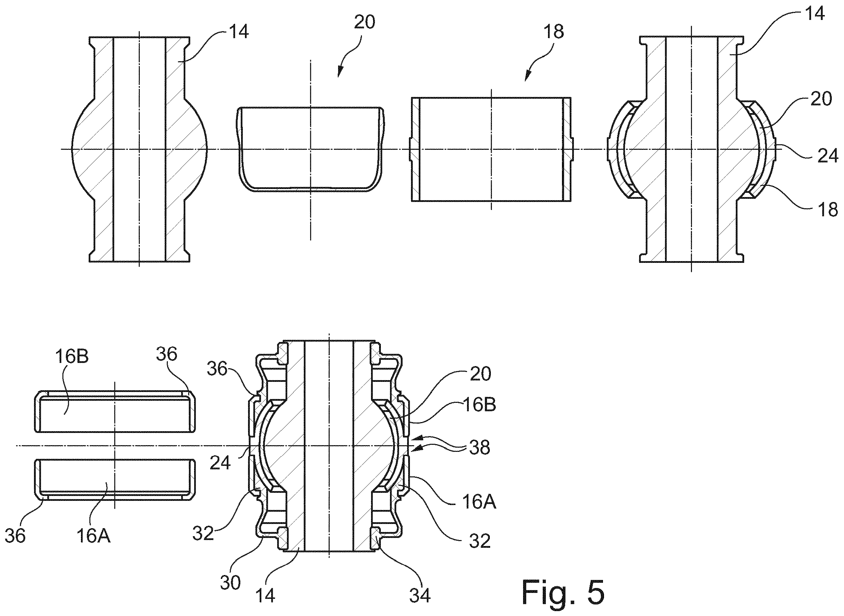

In Figur 5 ist eine dritte Ausführungsform des Kugelgelenks gezeigt. Für die von den ersten beiden Ausführungsformen bekannten Bauteile und Merkmale werden dieselben Bezugszeichen verwendet, und es wird insoweit auf die obigen Erläuterungen verwiesen.

Der Unterschied zwischen der dritten Ausführungsform und den vorhergehenden Ausführungsformen besteht darin, dass das Außengehäuse 16 zweiteilig ausgeführt ist. Es besteht aus zwei Hülsen 16A, 16B, die an der axialen Seite, die im montierten Zustand vom Mittelpunkt des Kugelgelenks abgewandt ist, jeweils eine nach innen vorstehende Schulter 36 aufweisen. Die Schultern 36 haben funktional dieselbe Wirkung wie die radialen Aufweitungen 28 am Innengehäuse 18 bei der zweiten Ausführungsform: es wird ein Sitz für den Wulst 32 des Dichtungsbalgs 30 gebildet.

Die beiden Hülsen 16A, 16B des Außengehäuses 16 werden mit dem Innengehäuse 18 verschweißt. Hierzu können umlaufende Schweißnähte 38 verwendet werden, die eine Verbindung zwischen der entsprechenden Hülse 16A, 16B und dem umlaufenden Bund 24 des Innengehäuses 18 herstellen.

Die Schultern 36 greifen hier in eine umlaufende Nut im Wulst 32 des Dichtungsbalgs 30 ein. An dieser Stelle können aber auch andere Verbindungskonfigurationen verwendet werden. Es kann zusätzlich vorgesehen sein, dass das Innengehäuse 18 mit einer radialen Aufweitung 28 ausgeführt wird.

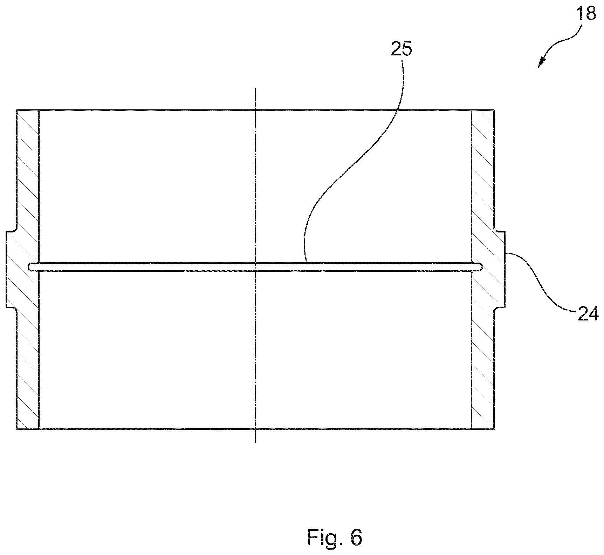

In Figur 6 ist eine Ausführungsvariante gezeigt, bei der der Bund 24 nicht durch unterschiedliche Wandstärken des Rohlings des Innengehäuses 18 erzeugt wird, sondern durch eine lokale plastische Verformung des mit einer konstanten Wandstärke ausgeführten Rohlings des Innengehäuses 18.

Die plastische Verformung führt zu einer "Falte" in der Wand des Innengehäuses, die auf dessen Innenseite als umlaufende Nut 25 zu sehen ist.

Die Falte kann dadurch erzeugt werden, dass der Rohling des Innengehäuses 18 lokal in radialer Richtung nach außen gedrückt wird, oder durch ein axiales Stauchen des gesamten Rohlings derart, dass die Wandung an der gewünschten Stelle nach außen ausweicht.

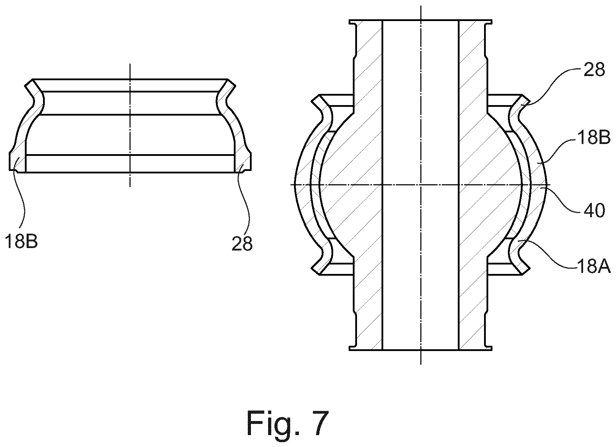

In Figur 7 ist in einem schematischen Querschnitt das Innengehäuse für ein Kugelgelenk gemäß einer vierten Ausführungsform gezeigt. Für die von den vorhergehenden Ausführungsformen bekannten Bauteile und Merkmale werden dieselben Bezugszeichen verwendet, und es wird insoweit auf die obigen Erläuterungen verwiesen.

Der Unterschied zwischen der vierten Ausführungsform und den vorhergehenden Ausführungsformen besteht darin, dass das Innengehäuse 18 aus zwei Halbschalen 18A, 18B zusammengesetzt ist.

Die beiden Halbschalen 18A, 18B werden aneinander befestigt, indem sie miteinander verschweißt werden (siehe die schematisch angedeutete Schweißnaht 40). Diese erstreckt sich in Umfangsrichtung am "Äquator" des Kugelgelenks.

Jede der Halbschalen 18A, 18B kann mit einer radialen Aufweitung 28 versehen sein, um dort einen Wulst eines Dichtungsbalgs aufnehmen zu können.

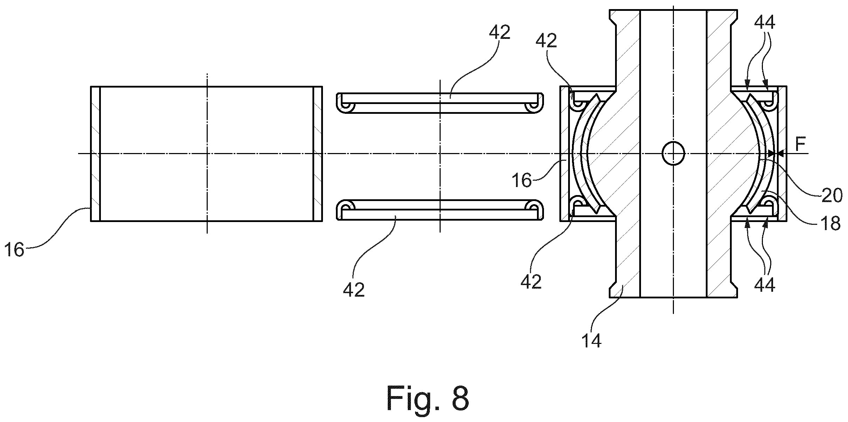

In Figur 8 ist eine fünfte Ausführungsform gezeigt. Für die von den vorhergehenden Ausführungsformen bekannten Bauteile und Merkmale werden dieselben Bezugszeichen verwendet, und es wird insoweit auf die obigen Erläuterungen verwiesen.

Der Unterschied zwischen der fünften Ausführungsform und den vorhergehenden Ausführungsformen besteht darin, dass das Innengehäuse nicht mit einem umlaufenden Bund 24 versehen ist, der zur Befestigung des Außengehäuses 16 am Innengehäuse 18 dient. Stattdessen werden zwei Stützringe 42 verwendet, die an den axialen Enden des Gehäuses 12 angeordnet sind und sowohl mit dem Außengehäuse 16 als auch dem Innengehäuse 18 verschweißt werden (siehe die schematisch angedeuteten Schweißnähte 44). Das so gebildete Gehäuse ist insgesamt sehr steif und hat gleichzeitig ein sehr geringes Gewicht.

Ein besonderer Vorteil besteht darin, dass im Bereich des Äquators des Kugelgelenks ein kleiner Freiraum F in radialer Richtung zwischen der Außenfläche des Innengehäuses 18 und der Innenfläche des Außengehäuses 16 vorliegt. Wenn das Außengehäuse 16 in diesem Bereich geringfügig nach innen verformt wird, wird diese Verformung nicht auf das Innengehäuse 18 übertragen. Dementsprechend führt eine Verformung des Außengehäuses 16 nicht zu einer Änderung der Reibungskraft des Kugelgelenks.

## Patentansprüche

1. Kugelgelenk (10) mit einem ringförmigen Außengehäuse (16), das aus mindestens einer Blechhülse besteht, einem im Außengehäuse (16) in axialer Richtung fest aufgenommenen, ringförmigen Innengehäuse (18), das aus mindestens einer Metallhülse besteht, einer im Innengehäuse (18) aufgenommenen Lagerschale (20) und einem Kugelzapfen (14), der in der Lagerschale (20) aufgenommen ist, **dadurch gekennzeichnet, dass** zwischen dem Innengehäuse (18) und dem Außengehäuse (16) zwei Stützringe (42) vorgesehen sind, die mit dem Innengehäuse (18) und dem Außengehäuse (16) verschweißt sind, wobei zwischen der Innenwand des Außengehäuses (16) und der Außenwand des Innengehäuses (18) ein Freiraum (F) vorhanden ist.

2. Kugelgelenk nach Anspruch 1, **dadurch gekennzeichnet, dass** das Innengehäuse (18) ein Blechteil ist.

3. Kugelgelenk (10) nach einem der vorhergehenden Ansprüche, **dadurch gekennzeichnet, dass** das Innengehäuse (18) an seinen axialen Enden eine radiale Aufweitung (28) aufweist, die jeweils als Sitz für einen Dichtungsbalg (30) dient.

4. Kugelgelenk (10) nach einem der vorhergehenden Ansprüche, **dadurch gekennzeichnet, dass** das Außengehäuse (16) aus einer einstückig ausgeführten Hülse besteht.

5. Kugelgelenk (10) nach einem der vorhergehenden Ansprüche, **dadurch gekennzeichnet, dass** das Innengehäuse (18) aus zwei miteinander verschweißten Halbschalen (18A, 18B) gebildet ist.

6. Kugelgelenk (10) nach einem der vorhergehenden Ansprüche, **dadurch gekennzeichnet, dass** das Außengehäuse (16) aus einem Blechstreifen besteht, der zu einer Hülse umgeformt ist, wobei zwei einander gegenüberliegende, sich in axialer Richtung erstreckende Längsränder miteinander verschweißt sind.

7. Kugelgelenk (10) nach einem der vorhergehenden Ansprüche, **dadurch gekennzeichnet, dass** das Innengehäuse (18) aus einem Blechstreifen besteht, der zu einer Hülse umgeformt ist, wobei zwei einander gegenüberliegende, sich in axialer Richtung erstreckende Längsränder miteinander verschweißt sind.

8. Kugelgelenk (10) nach einem der vorhergehenden Ansprüche, **dadurch gekennzeichnet, dass** der Kugelzapfen (14) hohl ist und dass es sich um ein Einpressgelenk handelt.

## Claims

1. A ball joint (10) comprising a ring-shaped outer housing (16) which consists of at least one sheet metal sleeve, a ring-shaped inner housing (18) which is firmly received in the outer housing (16) in the axial direction and which consists of at least one metal sleeve, a bearing shell (20) received in the inner housing (18), and a ball stud (14) which is received in the bearing shell (20), **characterized in that** two support rings (42) are provided between the inner housing (18) and the outer housing (16), which are welded to the inner housing (18) and the outer housing (16), a free space (F) being provided between the inner wall of the outer housing (16) and the outer wall of the inner housing (18).

2. The ball joint according to claim 1, **characterized in that** the inner housing (18) is a sheet metal part.

3. The ball joint (10) according to either of the preceding claims, **characterized in that** at its axial ends, the inner housing (18) has a respective radial widening (28), each of which serves as a seat for a sealing bellows (30).

4. The ball joint (10) according to any of the preceding claims, **characterized in that** the outer housing (16) consists of an integrally formed sleeve.

5. The ball joint (10) according to any of the preceding claims, **characterized in that** the inner housing (18) is formed of two half-shells (18A, 18B) welded to each other.

6. The ball joint (10) according to any of the preceding claims, **characterized in that** the outer housing (16) consists of a sheet metal strip which is reshaped to form a sleeve, two longitudinal edges located opposite each other and extending in the axial direction being welded to each other.

7. The ball joint (10) according to any of the preceding claims, **characterized in that** the inner housing (18) consists of a sheet metal strip which is reshaped to form a sleeve, two longitudinal edges located opposite each other and extending in the axial direction being welded to each other.

8. The ball joint (10) according to any of the preceding claims, **characterized in that** the ball stud (14) is hollow, and **in that** it is a press-fit joint.

## Revendications

1. Articulation sphérique (10) comprenant un boîtier extérieur annulaire (16) qui est composé d'au moins une douille en tôle, un boîtier intérieur annulaire (18) qui est reçu de manière solidaire dans le boîtier extérieur (16) dans le sens axial et qui est composé d'au moins une douille métallique, un coussinet de palier (20) qui est reçu dans le boîtier intérieur (18), et un tourillon sphérique (14) qui est reçu dans le coussinet de palier (20), **caractérisée en ce que** deux anneaux de support (42) qui sont soudés au boîtier intérieur (18) et au boîtier extérieur (16) sont prévus entre le boîtier intérieur (18) et le boîtier extérieur (16), un espace libre (F) étant présent entre la paroi intérieure du boîtier extérieur (16) et la paroi extérieure du boîtier intérieur (18).

2. Articulation sphérique selon la revendication 1, **caractérisée en ce que** le boîtier intérieur (18) est une pièce en tôle.

3. Articulation sphérique (10) selon l'une des revendications précédentes, **caractérisée en ce que** le boîtier intérieur (18) présente à ses extrémités axiales un évasement radial (28), qui sert respectivement de siège pour un soufflet d'étanchéité (30).

4. Articulation sphérique (10) selon l'une des revendications précédentes, **caractérisée en ce que** le boîtier extérieur (16) est composé d'une douille réalisée d'un seul tenant.

5. Articulation sphérique (10) selon l'une des revendications précédentes, **caractérisée en ce que** le boîtier intérieur (18) est formé de deux demi-coquilles (18A, 18B) soudées l'une à l'autre.

6. Articulation sphérique (10) selon l'une des revendications précédentes, **caractérisée en ce que** le boîtier extérieur (16) est composé d'une bande de tôle qui est façonnée de manière à former une douille, deux bords longitudinaux opposés l'un à l'autre et s'étendant dans le sens axial étant soudés l'un à l'autre.

7. Articulation sphérique (10) selon l'une des revendications précédentes, **caractérisée en ce que** le boîtier intérieur (18) est composé d'une bande de tôle qui est façonnée de manière à former une douille, deux bords longitudinaux opposés l'un à l'autre et s'étendant dans le sens axial étant soudés l'un à l'autre.

8. Articulation sphérique (10) selon l'une des revendications précédentes, **caractérisée en ce que** le tourillon sphérique (14) est creux et **en ce qu'**il s'agit d'une articulation à enfoncer.
